# EUROPÄISCHE PATENTSCHRIFT

(11) **EP 1 625 325 B1**
(45) Veröffentlichungstag und Bekanntmachung des Hinweises auf die Patenterteilung: **24.01.2007**
(21) Anmeldenummer: 04733548.4
(22) Anmeldetag: 18.05.2004
(51) Int. Cl.: F21S 8/12, F21S 8/10

(54) **SCHEINWERFER FÜR FAHRZEUGE**
HEADLAMP FOR VEHICLES
PHARE POUR VEHICULES

(30) Priorität: 20.05.2003 DE 10322627
(43) Veröffentlichungstag der Anmeldung: 15.02.2006
(73) Patentinhaber: Hella KGaA Hueck & Co., 59552 Lippstadt (DE)
(72) Erfinder: ROTGERI, Gerhard, 59590 Geseke (DE); DOBRESCU, Martin, 44651 Herne (DE); GÖSLING, Markus, 59558 Lippstadt (DE); DAUB, Wolfgang, 59609 Anröchte (DE)
(86) Internationale Anmeldenummer: PCT/EP2004/005351
(87) Internationale Veröffentlichungsnummer: WO 2004/104475

(56) Entgegenhaltungen:
- WO-A-98/38708
- DE-A- 19 737 640

## Beschreibung

Die Erfindung betrifft einen Scheinwerfer für Fahrzeuge mit einem Reflektor, der eine Reflektoröffnung zur Aufnahme einer Gasentladungslampe aufweist, mit einer Zündeinrichtung zum Betreiben der Gasentladungslampe, mit Haltemitteln zum lösbaren Verbinden der Zündeinrichtung mit einem Reflektor, mit zwischen der Zündeinrichtung und dem Reflektor angeordneten EMV-Kontaktmitteln.

Aus der DE 202 08 295 U1 ist ein Scheinwerfer für Fahrzeuge mit einem Reflektor, einer Gasentladungslampe und einer Zündeinrichtung bekannt, bei der die Zündeinrichtung und die Gasentladungslampe eine gemeinsame Baugruppe bilden. Zur elektromagnetischen Abschirmung der Verbindungsstelle zwischen der Lampen/Zündeinrichtung-Baugruppe und dem Reflektor ist als EMV-Kontaktmittel ein EMV-Abschirmblech vorgesehen, das ringförmig ausgebildet ist und zwischen einer Fläche des Reflektorhalses und einer Fläche der Zündeinrichtung angeordnet ist. Das EMV-Abschirmblech weist Lageröffnungen auf, an denen eine Haltefeder befestigt ist. Die Haltefeder wird über ein an der Rückseite der Zündeinrichtung angeordnetes Adapterteil aufgespannt, so dass eine feste Verbindung zwischen der Lampen/Zündeinrichtung-Baugruppe und dem Reflektor gegeben ist. Nachteilig an dem bekannten Scheinwerfer ist, dass zur Befestigung der Lampen/Zündeinrichtung-Baugruppe mit dem Reflektor mehrere Haltemittel, nämlich die bügelartige Haltefeder, das Adapterteil sowie das EMV-Abschirmblech vorgesehen sein müssen.

Aus der US 6 390 657 B1 ist ein Scheinwerfer für Fahrzeuge bekannt, bei dem eine Fassung der Gasentladungslampe mit einem Reflektor verbunden ist. Die Lampenfassung weist nachgiebige Zungen auf, die sich mit ihren freien Enden in rückwärtiger Richtung erstrecken und eine sichere elektrische Kontaktierung bilden mit einem rückseitig an der Fassung angeordneten Stecker.

Aus der US 6 474 856 B2 ist ein Scheinwerfer für Fahrzeuge mit einem Reflektor, einer Gasentladungslampe und einer Zündeinrichtung bekannt, bei der die Zündeinrichtung und die Gasentladungslampe eine gemeinsame Baugruppe bilden. Als Haltemittel zur Befestigung des Reflektors an der Zündeinrichtung erstrecken sich von dem Reflektorhals rückwärtig glockenförmige Halteelemente. Zur elektromagnetischen Abschirmung sind EMV-Kontaktmittel als Metallclips ausgebildet, die rahmen- und klammerartig den Reflektorhals und eine Umfangsfläche der Zündeinrichtung umfassen.

Aus der DE 201 07 817 U1 ist ein Scheinwerfer für Fahrzeuge mit einem Reflektor, einer in einer Öffnung des Reflektors angeordneten Gasentladungslampe und einer Zündeinrichtung bekannt, wobei an der Zündeinrichtung einerseits und im Bereich der Reflektoröffnung andererseits Haltemittel vorgesehen sind zur lösbaren Verbindung der Zündeinrichtung mit dem Reflektor. Die Haltemittel weisen Rasthaken bzw. Rastflächen auf, derart, dass die Zündeinrichtung mittels eines Bajonettverschlusses mit dem Reflektor verbunden ist. Die Gasentlandungslampe ist im Bereich der Reflektoröffnung mittels einer Aufnahmeinrichtung an dem Reflektor befestigt. Zur elektromagnetischen Abschirmung der Verbindungsstelle zwischen der Zündeinrichtung und dem Reflektor ist ein EMV-Kontaktmittel vorgesehen, das als Federring ausgebildet ist und flächig zwischen einem Gehäuse der Zündeinrichtung und einer Fläche des Reflektorhalses angeordnet ist. Der Federring ist in Umlaufrichtung wellenförmig und nachgiebig gestaltet, so dass er sich im Sinne einer guten Kontaktierung zwischen den zueinandergekehrten Flächen der Zündeinrichtung und des Reflektorhalses anpasst. Nachteilig an dem bekannten Scheinwerfer ist, dass zur Montage des Scheinwerfer das EMV-Kontaktmittel zusätzlich bereitgehalten werden muss.

Aufgabe der vorliegenden Erfindung ist es, einen Scheinwerfer für Fahrzeuge derart weiterzubilden, dass der Befestigungsaufwand unter Einschluss insbesondere des EMV-Kontaktmittels weiter verringert wird.

Zur Lösung dieser Aufgabe ist die Erfindung in Verbindung mit dem Oberbegriff des Patentanspruch 1 dadurch gekennzeichnet, dass das Haltemittel ein Halteelement umfasst, das zusammen mit der Zündeinrichtung und der Gasentladungslampe eine gemeinsame Baugruppe bildet und dass das EMV-Kontaktmittel in dem Halteelement integriert angeordnet ist, derart, dass in einer Verriegelungsstellung des Halteelementes mit dem Reflektor eine elektrisch leitende Verbindung zwischen der Zündeinrichtung und dem Reflektor besteht.

Der besondere Vorteil der Erfindung besteht darin, dass die Montage bzw. Demontage der mit der Zündeinrichtung verbundenen Gasentladungslampe vereinfacht wird. Erfindungsgemäß ist das EMV-Kontaktmittel Bestandteil eines Halteelementes, das vorzugsweise lösbar mit der Zündeinrichtung und/oder der Fassung der Gasentladungslampe verbunden ist. Vorteilhaft bildet das Halteelement eine Aufnahme für das EMV-Kontaktmittel, so dass eine vereinfachte Befestigung sowohl der Gasentladungslampe und der Zündeinrichtung an dem Reflektor gegeben ist. Durch die definierte Lage des EMV-Kontaktmittels an dem Halteelement ist eine sichere Kontaktierung zwischen der Zündeinrichtung und dem Reflektor in der Verriegelungsstellung des Halteelementes gegeben.

Nach einer bevorzugten Ausführungsform der Erfindung ist das Halteelement ringförmig ausgebildet. Es ist koaxial zu der Längsachse der Gasentladungslampe angeordnet. Weiterhin weist das Halteelement Befestigungsmittel zum lösbaren Verbinden mit einem Hals des Reflektors auf. Vorzugsweise sind die Befestigungsmittel derart ausgebildet, dass das Halteelement einen Teil eines Bajonettverschlusses bildet. Hierdurch kann eine einfache und sichere Befestigung der Gasentladungslampe/Zündeinrichtung an dem Reflektor gewährleistet sein.

Nach einer Weiterbildung der Erfindung weist das Halteelement mehrere revolverartig verteilt angeordnete Ausnehmungen auf, durch die jeweils EMV-Kontaktelemente klemmend eingreifen. Vorteilhaft sind mehrere EMV-Kontaktelemente einstückig miteinander verbunden. Vorteilhaft sind die EMV-Kontaktelemente unverlierbar an dem Halteelement gehalten.

Nach einer bevorzugten Ausführungsform der Erfindung ist das Halteelement als Haltering ausgebildet, der über Funktionselemente verfügt, derart; dass zumindest ein Teilbereich des Halterings in der Haupterstreckungsebene desselben bewegbar angeordnet ist. Auf diese Weise wird ein einfaches Lösen und Verbinden des Halterings an der Zündeinrichtung und/oder der Gasentladungslampe gewährleistet.

Nach einer Weiterbildung der Erfindung ist der Haltering in einer Ringnut der Zündeinrichtung und/oder der Lampenfassung eingreifbar positioniert, so dass eine sichere Verklemmung in axialer Richtung gegeben ist. Durch Befestigungsfunktionselemente des Halterings selbst erfolgt eine Feststellung desselben in radialer Richtung.

Nach einer bevorzugten Ausführungsform der Erfindung weist der Haltering Befestigungselemente auf, derart, dass ein Ringsegment des Halterings um eine parallel zur Längsachse der Gasentladungslampe angeordnete Verschwenkachse des Halterings verschwenkbar ausgebildet ist. Vorzugsweise sind die Befestigungselemente zum einen durch ein Gelenk gebildet, an dem zwei halbkreisförmige Ringsegmente des Halteringes gelagert sind. Zum anderen dient als Befestigungselement ein Rastverschluss mit Rastmitteln, die an eine zu dem Gelenk abgewandten Ende der halbkreisförmigen Ringsegmente des Halterings angeordnet sind und ein rastendes Verbinden dieser Enden der Ringsegmente bewirken.

Nach einer alternativen Ausführungsform weist der Haltering zwei Ringsegmente auf, die über ein Federelement miteinander gekoppelt sind. Ein Lösen bzw. Befestigen des Halterings erfolgt hierbei durch Auseinanderziehen der beiden Ringsegmente.

Nach einer Weiterbildung der Erfindung weist das Halteelement einen axialen Bajonettring mit Befestigungsmitteln auf, derart, dass nach dem Befestigen des Halteelementes an der Zündeinrichtung und/oder der Lampenfassung die Lampen/Zündeinrichtung-Baugruppe mittels eines Bajonettverschlusses mit dem Reflektor verbindbar ist. Das Halteelement vereinigt somit mehrere Befestigungsfunktionen. Zum einen weist es Ausnehmungen auf zur klemmenden Befestigung des EMV-Kontaktelementes. Zum zweiten weist es selbst Befestigungsmittel auf, so dass es in eine Ringnut der Zündeinrichtung bzw. der Lampenfassung verriegelnd eingreifbar ist. Zum dritten weist das Halteelement einen Bajonettring auf, mittels dessen eine feste und sichere Verbindung der Zündeinrichtung bzw. der Gasentladungslampe mit dem Reflektor gegeben ist.

Nach einer Weiterbildung der Erfindung ist das Halteelement als Kunststoffteil ausgebildet, so dass eine Wärmeisolierung gegeben ist. Weiterhin dient das Halteelement zum Toleranzausgleich von Nichtplanaritäten im Bereich der Verbindungsstelle.

Ausführungsbeispiele der Erfindung werden nachfolgend anhand der Zeichnungen näher erläutert.

Es zeigen:
- Figur 1: eine perspektivische Darstellung eines Projektionsmoduls von vorne für einen Scheinwerfer,
- Figur 2: eine perspektivische Darstellung einer Lampen/Zündeinrichtung-Baugruppe mit einem geöffneten Halteelement,
- Figur 3: einen Teilquerschnitt durch den Scheinwerfer,
- Figur 4: eine Rückansicht eines Halteelementes, das in einer Ringnut der Zündeinrichtung befestigt ist,
- Figur 5: eine perspektivische Darstellung des ringförmigen Halteelementes und von EMV-Kontaktelementen, wobei das Halteelement in einem geöffneten Zustand ist,
- Figur 6: eine schematische Vorderansicht auf ein Halteelement nach einer zweiten Ausführungsform und
- Figur 7: eine schematische Vorderansicht eines Halteelementes nach einer dritten Ausführungsform.

Ein Scheinwerfer 1 für Fahrzeuge besteht im wesentlichen aus einem Projektionsmodul mit einer fest mit einer Zündeinrichtung 2 verbundenen Gasentladungslampe 3, einem Reflektor 4 sowie Haltemitteln 5 zum lösbaren Befestigen der Zündeinrichtung 2 mit dem Reflektor 4 sowie EMV-Kontaktmitteln 11 zur elektromagnetischen Abschirmung der Verbindungsstelle zwischen der Zündeinrichtung 2 und dem Reflektor 4.

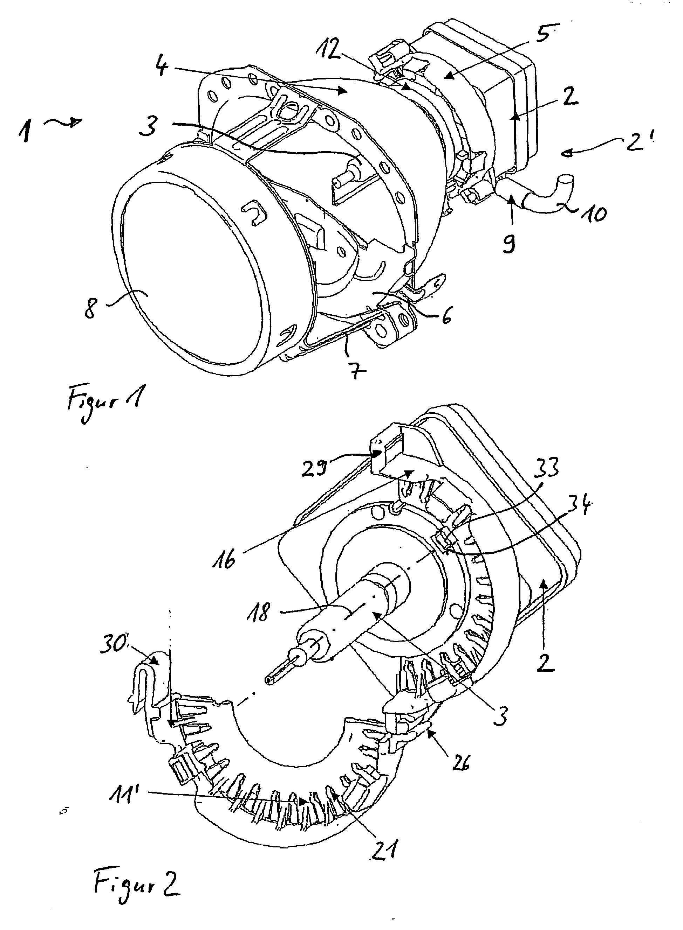

Der Scheinwerfer 1 gemäß Figur 1 funktioniert nach dem Projektionsprinzip und weist überdies eine Blendeneinrichtung 6 sowie eine in einem Linsenhalter 7 gelagerte Linse 8 auf. Von der Zündeinrichtung 2 führt über einen EMVgeschirmter Stecker 9 eine elektrische Verbindungsleitung 10 zu einer ortsfern angeordneten nicht dargestellten Steuereinheit zur Erzeugung eines Betriebsstromes. Der Betriebsstrom ist erforderlich, um in der Zündeinrichtung 2 die zum Zünden der Gasentladung in der Lampe 3 erforderliche Hochspannung zu erzeugen.

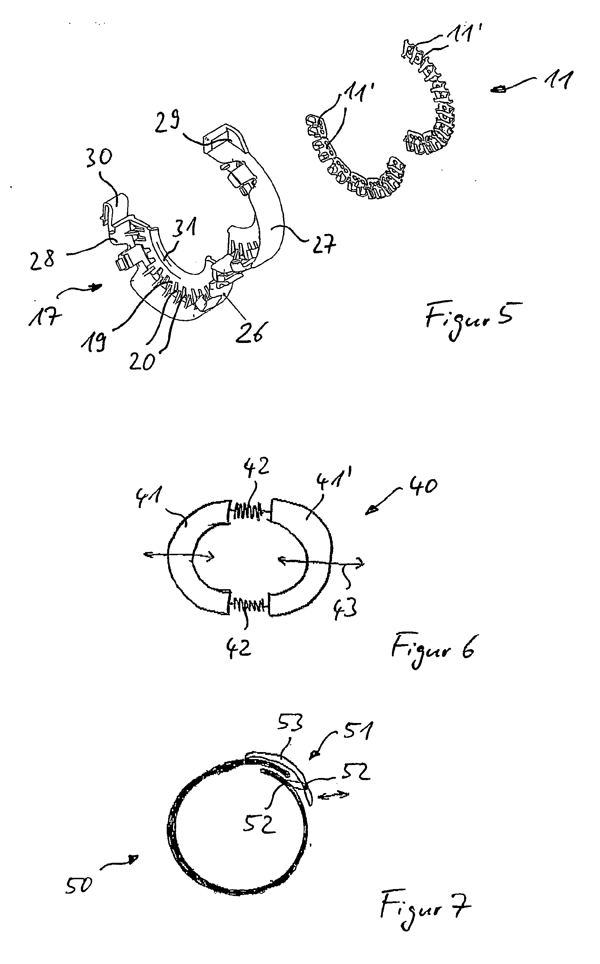

Zur lösbaren Verbindung der Zündeinrichtung/Gasentladungslampe-Baugruppe 2' mit einem Hals 12 des Reflektors 4 ist ein Bajonettverschluss 13 vorgesehen. Zur Bildung des Bajonettverschlusses 13 weist zum einen der Reflektorhals 12 nicht dargestellte Anschläge und Ringsegmente 14 auf, die von in Umfangsrichtung verteilt angeordneten L-förmigen Haltevorsprüngen 15 hintergriffen werden. Die Haltevorsprünge 15 bilden einen Teil eines Bajonettringes 16, der Bestandteil eines in Figur 4 dargestellten Halteelementes 17 ist.

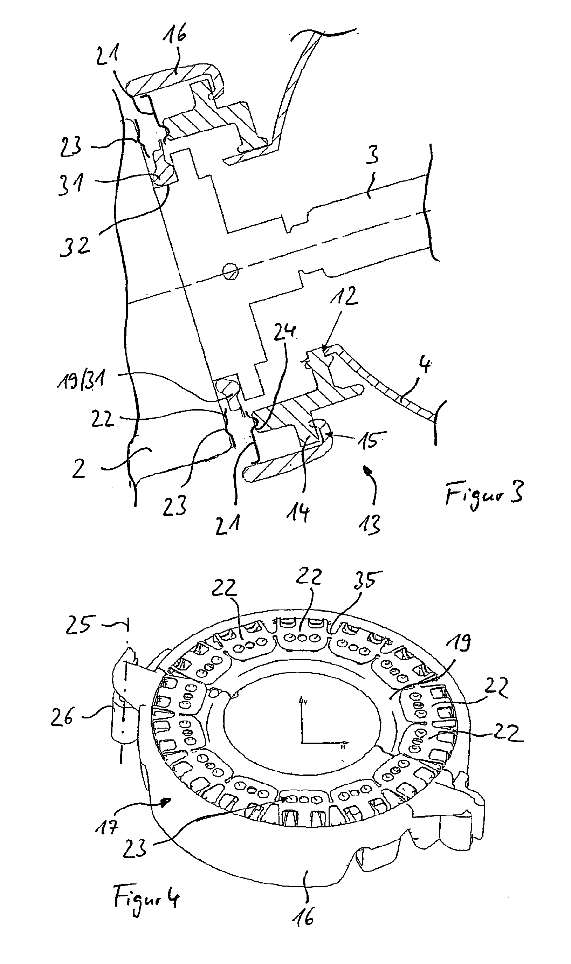

Das Halteelement 17 ist ringförmig ausgebildet und weist einen sich senkrecht zu einer Längsachse 18 der Gasentladungslampe 3 erstreckenden Haltering 19 sowie den sich an der Außenumfangsfläche des Halterings 19 nach vorne anschließenden Bajonettring 16 auf. Der Haltering 19 weist eine Mehrzahl von revolverartig in Umfangsrichtung verteilt angeordneten Ausnehmungen 20 auf, in die von einer Rückseite des Halterings 19 aus die EMV-Kontaktmittel 11 klemmend einsetzbar sind. Wie besser aus Figur 5 zu ersehen ist, sind die EMV-Kontaktmittel 11 durch eine Mehrzahl von EMV-Kontaktelementen 11' gebildet, die einstückig miteinander verbunden sind und einen Teilkreisring bilden. Die EMV-Kontaktelemente 11' sind jeweils klammerförmig ausgebildet und weisen zum einen Federlappen 21 auf, die in die Ausnehmung 20 des Halterings 19 eingreifen. Zum anderen weist das EMV-Kontaktelement 11' eine ebene Anlagefläche 22 auf, die zum einen an einer Rückseite des Halterings 19 und zum anderen an einer dem Reflektorhals 12 zugewandten Seite der Zündeinrichtung 2 flächig anliegt, siehe Figur 3. Zur Verbesserung der Kontaktierung mit der elektrisch leitenden Außenhülle der Zündeinrichtung 2 weist die Anlagefläche 22 zur Zündeinrichtung 2 hin abragende Ausbuchtungen bzw. Kontaktwarzen 23 auf.

Wie aus Figur 3 zu ersehen ist, ragen die Federlappen 21 aus der Ebene des Halterings 19 ab und drücken gegen eine radiale und durchgehende Randfläche 24 des Reflektorhalses 12. Hierdurch ist eine sichere Kontaktierung in einer Verriegelungsstellung des Halteelementes 17 gewährleistet.

Der Reflektorhals 12 ist, wie der aus einem Aluminium-Druckguss hergestellte Reflektor 4, aus einem elektrisch leitenden Material hergestellt. Alternativ kann der Reflektor 4 auch als ein Tiefziehteil aus Blech hergestellt sein.

Wie aus Figur 4 und 5 hervorgeht, weist das Halteelement 17 Funktionselemente auf, so dass es um eine Verschwenkachse 25 öffenbar ist. Die Verschwenkachse 25 erstreckt sich parallel zu der Längsachse 18 der Lampe 3 und wird durch ein Gelenk 26 gebildet, so dass ein erstes Ringsegment 27 des Halteelementes 17 relativ zu einem zweiten Ringsegment 28 desselben verschwenkbar angeordnet ist. Das erste Ringsegment 27 und das zweite Ringsegment 28 weisen an einem dem Gelenk 26 abgewandten Ende eine Rastöffnung 29 bzw. eine Rastlasche 30 auf, so dass die Ringsegmente 27, 28 nach Eingreifen derselben unter Anlage eines Innenringabschnitts 31 derselben in eine Ringnut 32 der Zündeinrichtung 2 in eine Ringnut 32 der Zündeinrichtung 2 axial gesichert sind. Die Dicke des Innenringabschnitts 31 ist so gewählt, dass er mit Spiel in der Ringnut 32 gelagert ist. Der Innenringabschnitt 31 weist mindestens einen axial abragenden Befestigungsnocken 33 auf, der in eine entsprechende Ausnehmung 34 der Lampenfassung 3 eingreift.

Wie aus Figur 2 zu ersehen ist, erfolgt die Montage des Halteelementes 17 mit der Zündeinrichtung 2 durch Eingreifen des ersten Ringsegmentes 27 in die Ringnut 32, wobei sich das Halteelement 17 in einer Öffnungsstellung befindet. Nachfolgend wird das zweite Ringsegment 28 in Richtung des ersten Ringsegmentes 27 unter Eingreifen des Innenringabschnitts 31 in die Ringnut 32 bewegt, bis sich das Halteelement 17 mittels rastender Verbindung der Rastlasche 30 und der Rastöffnung 29 in der Schließstellung befindet. Die ringförmigen EMV-Kontaktmittel 11 wurden vorher in die entsprechenden Ausnehmungen 20 des Halterings 19 klemmend eingesetzt.

Nach einer nicht dargestellten alternativen Ausführungsform können die EMV-Kontaktmittel 11 auch als Wellscheibe ausgebildet sein, die klemmend an dem Haltering 9 befestigt ist und Ausbuchtungen in rückseitiger und vorderseitiger Richtung aufweist.

Die Abstände der über einen Verbindungssteg 35 miteinander verbundenen EMV-Kontaktelementen 11' ist relativ klein gewählt, damit eine umfassende elektromagnetische Abschirmung gegeben ist. Die Länge der Verbindungsstege 35 beträgt vorzugsweise wenige Millimeter, vorzugsweise kleiner als 5 mm.

In dem genannten Ausführungsbeispiel ist sowohl der Haltering 19 als auch der Bajonettring 16 aus einem Kunststoffmaterial einstückig hergestellt.

Nach einer nicht dargestellten Ausführungsform kann der Bajonettring zur Verbesserung der elektromagnetischen Abschirmung aus Metall ausgebildet sein oder einen metallischen Überzug aufweisen.

Zur Montage des Scheinwerfers 1 wird die aus der Zündeinrichtung 2, der Gasentladungslampe 3 und dem Halteelement 17 gebildete Baugruppe 2' mit dem Reflektor 4 verbunden. Das Halteelement 17 ist drehfest mit der Zündeinrichtung 2 verbunden. Der Bajonettring 16 greift mit seinen nach vorne abstehenden Haltevorsprüngen 15 zwischen die radialen Ringsegmente 14 des Reflektorhalses 12 ein. Durch nachfolgende Verdrehen der Zündeinrichtung 2 relativ zu dem Reflektor 4 um die Längsachse 18 der Gasentladungslampe 3 erfolgt unter klemmender Anlage der Haltevorsprünge 15 auf der Vorderseite der Ringsegmente 14 eine Verriegelung des Halteelementes 17 bzw. der Zündeinrichtung 2 mit dem Reflektor 4. In üblicher Weise wird das Halteelement 17 zusammen mit der Zündeinrichtung 2 und der Gasentladungslampe 3 um einen Winkel von ca. 45° verdreht, um in die Verriegelungsstellung zu gelangen.

Der so gebildete Scheinwerfer 1 kann mit einem nicht dargestellten Gehäuse nun in eine vorgesehene, nicht dargestellte Karosserieöffnung montiert werden.

Zum Lampenwechsel wird die Baugruppe 2' aus dem Gehäuse des Scheinwerfers 1 entnommen, die Gasentladungslampe 3 ausgetauscht und dann die Baugruppe 2' wieder in das Gehäuse des Scheinwerfers 1 montiert.

Nach einer zweiten Ausführungsform eines Halteelementes 40 gemäß Figur 6 kann dasselbe durch zwei Ringsegmente 41, 41' gebildet sein, die an ihren Enden jeweils über ein Federelement 42 miteinander verbunden sind. Durch Anwenden einer Kraft 43 in Richtung der Wirkungsrichtung der Federelemente 42 kann das Halteelement 40 in eine Öffnungsstellung bzw. Schließstellung verbracht werden.

Nach einer dritten Ausführungsform gemäß Figur 7 ist ein Halteelement 50 als Haltering ausgebildet, der in einem Ringabschnitt ein Verstellgestänge 51 aufweist zum Verbringen des Halteelementes 50 in eine Schließ- und Öffnungsstellung. Das Verstellgestänge 51 weist mindestens zwei Gelenke 52 und eine äußere Klammer 53 auf, mittels derer eine schnappende Schließstellung des "offenen" Halterings 50 ermöglicht wird.

## Patentansprüche

1. Scheinwerfer (1) für Fahrzeuge
- mit einem Reflektor (4), der eine Reflektoröffnung zur Aufnahme einer Gasentladungslampe (3) aufweist,
- mit einer Zündeinrichtung (2) zum Betreiben der Gasentladungslampe (3),
- mit Haltemitteln (5) zum lösbaren Verbinden der Zündeinrichtung (2) mit einem Reflektor (4),
- mit zwischen der Zündeinrichtung (2) und dem Reflektor (4) angeordneten EMV-Kontaktmitteln (11),
**dadurch gekennzeichnet, dass** das Haltemittel ein Halteelement (17) umfasst, das zusammen mit der Zündeinrichtung (2) und der Gasentladungslampe (3) eine gemeinsame Baugruppe (2') bildet und dass das EMV-Kontaktmittel (11) in dem Halteelement (17) integriert angeordnet ist, derart, dass in einer Verriegelungsstellung des Halteelementes (17) mit dem Reflektor (4) eine elektrisch leitende Verbindung zwischen der Zündeinrichtung (2) und dem Reflektor (4) besteht.

2. Scheinwerfer nach Anspruch 1, **dadurch gekennzeichnet, dass** das Halteelement (17) ringförmig ausgebildet und koaxial zu einer Längsachse (18) der Gasentladungslampe (3) angeordnet ist und dass das Halteelement (17) über Befestigungsmittel (15, 16) verfügt zum lösbaren Verbinden mit einem Hals (12) des Reflektors (4).

3. Scheinwerfer nach Anspruch 1 oder 2, **dadurch gekennzeichnet, dass** das Halteelement (17) mehrere revolverartig verteilt angeordnete Ausnehmungen (20) aufweist, in denen jeweils EMV-Kontaktelemente (11') klemmend positioniert sind.

4. Scheinwerfer nach einem der Ansprüche 1 bis 3, **dadurch gekennzeichnet, dass** das Halteelement (17) über einen Haltering (19) zur Aufnahme von EMV-Kontaktmitteln (11) einerseits und über Befestigungselemente (26, 29, 30) andererseits verfügt, derart, dass zumindest ein Teilbereich des Halterings (19) in einer senkrecht zur Längsachse (18) der Gasentladungslampe (3) angeordneten Ebene bewegbar angeordnet ist zum Lösen und Verbinden des Halterings (19) an der Zündeinrichtung (2) und/oder an der Gasentladungslampe (3).

5. Scheinwerfer nach einem der Ansprüche 1 bis 4, **dadurch gekennzeichnet, dass** der Haltering (19) einen Innenringabschnitt (31) aufweist, derart, dass das Halteelement (17) klemmend in einer Ringnut (32) der Zündeinrichtung (2) und/oder der Lampenfassung (3) eingreift.

6. Scheinwerfer nach einem der Ansprüche 1 bis 5, **dadurch gekennzeichnet, dass** das Halteelement (17) in zumindest ein erstes Ringsegment (27) und ein zweites Ringsegment (28) aufgeteilt ist mit einem Gelenk, derart, dass das erste Ringsegment (27) und/oder das zweite Ringsegment (28) um eine Verschwenkachse (25) verschwenkbar ausgebildet ist.

7. Scheinwerfer nach einem der Ansprüche 1 bis 5, **dadurch gekennzeichnet, dass** das Halteelement (40) mindestens zwei Ringsegmente (41, 41') aufweist, die über mindestens ein Federelement (42) miteinander gekoppelt sind, und dass die Wirkungsrichtung des Federelementes (22) senkrecht zur Längsachse (18) der Gasentladungslampe (3) orientiert ist.

8. Scheinwerfer nach einem der Ansprüche 1 bis 5, **dadurch gekennzeichnet, dass** das Halteelement (50) ein Verstellgestänge (51) aufweist, mittels dessen das Halteelement in zumindest zwei Stellungen unterschiedlicher Umfangslänge bringbar ist.

9. Scheinwerfer nach einem der Ansprüche 1 bis 8, **dadurch gekennzeichnet, dass** das Halteelement (17, 40, 50) einen Bajonettring (16) aufweist, mittels dessen eine Verriegelung mit dem Reflektorhals (12) bewirkbar ist.

10. Scheinwerfer nach einem der Ansprüche 1 bis 9, **dadurch gekennzeichnet, dass** der Haltering (19) und der Bajonettring (16) einstückig miteinander verbunden und als Kunststoffspritzteil ausgebildet sind.

## Claims

1. Headlamp (1) for vehicles
- with a reflector (4), which has a reflector opening for accommodating a gas discharge lamp (3),
- with an ignition device (2) for operating the gas discharge lamp (3),
- with holding means (5) for detachably connecting the ignition device (2) with a reflector (4),
- with EMC contacting means (11) arranged between the ignition device (2) and the reflector (4),
**characterised in that** the holding means comprise a holding element (17), which conjointly with the ignition device (2) and the gas discharge lamp (3) form a common assembly (2') and that the EMC contacting means (11) are arranged so as to be integrated into the holding element (17), in such a way that an electroconductive connection is set up between the ignition device (2) and the reflector (4) when the holding element (17) is in a locked position with the reflector (4).

2. Headlamp according to claim 1, **characterised in that** the holding element (17) is constructed ring-shaped and is arranged coaxially to a longitudinal axis (18) of the gas discharge lamp (3) and that the holding element (17) has at its disposal fastening means (15, 16) for detachably connecting with a neck (12) of the reflector (4).

3. Headlamp according to claim 1 or 2, **characterised in that** the holding element (17) has several recesses (20) arranged so that they are distributed in a revolver like manner, in which the EMC contacting elements (11') are positioned so as to be clamped in each case.

4. Headlamp according to one of claims 1 to 3, **characterised in that** the holding element (17) has at its disposal a holding ring (19) for accommodating EMC contacting means (11) on the one hand and fastening means (26, 29, 30) on the other hand, in such a manner that at least a portion of the holding ring (19) is arranged so as to be moveable in a plane positioned perpendicular to the longitudinal axis (18) of the gas discharge lamp (3) in order to loosen and connect the holding ring (19) on the ignition device (2) and / or on the gas discharge lamp (3).

5. Headlamp according to one of claims 1 to 4, **characterised in that** the holding ring (19) has an inner ring section (31) in such a way that the holding element (17) engages clampingly in a ring groove (32) of the ignition device (2) and / or the lamp holder (3).

6. Headlamp according to one of claims 1 to 5, **characterised in that** the holding element (17) is divided into at least a first ring segment (27) and a second ring segment (28) with a hinge, in such a way that the first ring segment (27) and / or the second ring segment (28) is constructed so as to be pivotable around a pivot axis (25).

7. Headlamp according to one of claims 1 to 5, **characterised in that** the holding element (40) has at least two ring segments (41, 41'), which are linked together by at least one spring element (42) and that the direction of action of the spring element (22) is orientated perpendicular to the longitudinal axis (18) of the gas discharge lamp (3).

8. Headlamp according to one of claims 1 to 5, **characterised in that** the holding element (50) has an adjustable linkage (51), by means of which the holding element can be brought into at least two positions of differing perimeter lengths.

9. Headlamp according to one of claims 1 to 8, **characterised in that** the holding element (17, 40, 50) has a bayonet ring (16), by means of which a locking with the reflector neck (12) may be effected.

10. Headlamp according to one of claims 1 to 9, **characterised in that** the holding ring (19) and the bayonet ring (16) are connected with each other as a single piece and are constructed as an injection moulded plastic part.

## Revendications

1. Projecteur (1) pour véhicules, comportant
- un réflecteur (4) qui présente une ouverture de réflecteur pour recevoir une lampe à décharge de gaz (3),
- un dispositif d'amorçage (2) pour faire fonctionner la lampe à décharge de gaz (3),
- des moyens de retenue (5) pour lier de manière détachable le dispositif d'amorçage (2) à un réflecteur (4),
- des moyens de contact CEM (11) agencés entre le dispositif d'amorçage (2) et le réflecteur (4),
**caractérisé en ce que** le moyen de retenue comprend un élément de retenue (17) qui forme conjointement avec le dispositif d'amorçage (2) et la lampe à décharge de gaz (3) un ensemble structurel (2') commun et **en ce que** les moyens de contact CEM (11) sont agencés de manière intégrée dans l'élément de retenue (17) de telle sorte que dans une position de verrouillage de l'élément de retenue (17) avec le réflecteur (4), il y a une liaison électroconductrice entre le dispositif d'amorçage (2) et le réflecteur (4).

2. Projecteur selon la revendication 1, **caractérisé en ce que** l'élément de retenue (17) est réalisé de forme annulaire et agencé coaxialement à un axe longitudinal (18) de la lampe à décharge de gaz (3) et **en ce que** l'élément de retenue (17) dispose de moyens de fixation (15, 16) pour être relié de manière détachable avec un col (12) du réflecteur (4).

3. Projecteur selon la revendication 1 ou 2, **caractérisé en ce que** l'élément de retenue (17) présente plusieurs évidements (20) agencés de façon répartie à la manière d'un barillet, dans chacun desquels des éléments de contact CEM (11') sont positionnés avec serrage.

4. Projecteur selon l'une des revendications 1 à 3, **caractérisé en ce que** l'élément de retenue (17) dispose d'une bague de retenue (19) pour recevoir des moyens de contact CEM (11), d'une part, et d'éléments de fixation (26, 29, 30), d'autre part, de telle sorte qu'au moins une région partielle de la bague de retenue (19) est agencée de manière à pouvoir se déplacer dans un plan agencé perpendiculairement à l'axe longitudinal (18) de la lampe à décharge de gaz (3) pour détacher et relier la bague de retenue (19) sur le dispositif d'amorçage (2) et/ou sur la lampe à décharge de gaz (3).

5. Projecteur selon l'une des revendications 1 à 4, **caractérisé en ce que** la bague de retenue (19) présente un tronçon de bague intérieur (31) de telle sorte que l'élément de retenue (17) s'engage par serrage dans une gorge annulaire (32) du dispositif d'amorçage (2) et/ou de la douille de lampe (3).

6. Projecteur selon l'une des revendications 1 à 5, **caractérisé en ce que** l'élément de retenue (17) est divisé en au moins un premier segment annulaire (27) et en un deuxième segment annulaire (28) avec une articulation, de telle sorte que le premier segment annulaire (27) et/ou le deuxième segment annulaire (28) est réalisé pivotant autour d'un axe de pivotement (25).

7. Projecteur selon l'une des revendications 1 à 5, **caractérisé en ce que** l'élément de retenue (40) présente au moins deux segments annulaires (41, 41') qui sont accouplés l'un à l'autre via au moins un élément ressort (42), et **en ce que** la direction d'action de l'élément ressort (22) est orientée perpendiculairement à l'axe longitudinal (18) de la lampe à décharge de gaz (3).

8. Projecteur selon l'une des revendications 1 à 5, **caractérisé en ce que** l'élément de retenue (50) présente une tringlerie de réglage (51) au moyen de laquelle l'élément de retenue peut être amené dans au moins deux positions de longueur périphérique différente.

9. Projecteur selon l'une des revendications 1 à 8, **caractérisé en ce que** l'élément de retenue (17, 40, 50) présente une bague à baïonnette (16) au moyen de laquelle on peut obtenir un verrouillage sur le col de réflecteur (12).

10. Projecteur selon l'une des revendications 1 à 9, **caractérisé en ce que** la bague de retenue (19) et la bague à baïonnette (16) sont reliées d'un seul tenant l'une à l'autre et sont réalisées sous forme de pièces moulées par injection en matière plastique.
